# EUROPÄISCHE PATENTSCHRIFT

(11) **EP 3 699 399 B1**
(45) Veröffentlichungstag und Bekanntmachung des Hinweises auf die Patenterteilung: **02.10.2024**
(21) Anmeldenummer: 20158370.5
(22) Anmeldetag: 20.02.2020
(51) Int. Cl.: F01D 5/22, F01D 5/14

(54) **SCHAUFEL FÜR EINE SCHNELLLAUFENDE TURBINENSTUFE MIT EINZELNEM DICHTELEMENT**
BLADE FOR A HIGH-SPEED TURBINE STAGE WITH SINGLE SEALING ELEMENT
AUBE POUR UN ÉTAGE DE TURBINE À GRANDE VITESSE DOTÉE D'UN ÉLÉMENT D'ÉTANCHÉITÉ UNIQUE

(30) Priorität: 21.02.2019 DE 102019202387
(43) Veröffentlichungstag der Anmeldung: 26.08.2020
(73) Patentinhaber: MTU Aero Engines AG, 80995 München (DE)
(72) Erfinder: Maar, Karl, 80995 München (DE); Frischbier, Jörg, 80995 München (DE); Klingels, Hermann, 80995 München (DE); Wittmer, Jens, 80995 München (DE); Pernleitner, Martin, 80995 München (DE)

(56) Entgegenhaltungen:
- EP-A1- 3 168 420
- EP-A1- 3 314 093
- EP-A2- 2 617 944
- EP-A2- 2 626 517
- EP-B1- 3 314 093
- US-A1- 2006 280 610

## Beschreibung

Die vorliegende Erfindung betrifft eine Schaufel für eine schnelllaufende Turbinenstufe einer Fluggasturbine, insbesondere eines Flugzeugtriebwerks.

Bei einer schnelllaufenden Turbinenstufe, die insbesondere als Niederdruckturbine in einem Triebwerk mit Getriebfan, auch als GTF (geared Turbofan) bezeichnet, ergeben sich Werte für Umlaufgeschwindigkeit Utip an der Schaufelspitze von 300m/s und mehr. Im Vergleich dazu liegt die Umlaufgeschwiendigkeit Utip bei Turbinenstufen konventioneller Triebwerken bzw. bei nicht schnelllaufenden Turbinenstufen, die mit der Fan-Drehzahl laufen, bei maximal 250m/s.

"Schnellaufend" bedeutet in diesem Zusammenhang, dass die betreffende Turbinenstufe mittels eines Getriebes mit dem Fan bzw. Triebwerkseintrittslaufrad gekoppelt ist, so dass es sich im Betrieb der oder die betreffenden Laufschaufelkränze dieser Turbinenstufe schneller drehen als der Fan.

Richtungsangaben wie "Axial-" bzw. "axial", "Radial-" bzw. "radial" und "Umfangs-" sind grundsätzlich auf die Maschinenachse der Fluggasturbine bezogen zu verstehen, sofern sich aus dem Kontext nicht explizit oder implizit etwas anderes ergibt.

In schnellaufenden Turbinenstufen ist die Belastung auf die Schaufeln bzw. deren Schaufelblätter sehr groß. Insbesondere sind die Schaufelblätter im Betrieb einer höheren Fremdpartieklenergie in Folge der höheren Umlaufgeschwindigkeiten ausgesetzt, sogenannten Einschlägen bzw. Impacts, die zu Primär- und Folgeschäden an den Schaufeln führen. Dabei sind die Primär- und Folgeschäden umso größer, je schneller sich die Turbinenstufe bzw. die Schaufeln im Heißgasstrom drehen. Ferner sind auch starke Einflüsse der wirkenden Fliehkräfte auf die Schaufeln feststellbar. Dabei ist weiter zu berücksichtigen, dass für solche Schaufeln üblicherweise Nickel-Werkstoffe verwendet werden. Bei Verwendung von Schaufeln aus spröden Werkstoffen ist entsprechend stärkerer Verschleiß bzw. Schädigung festzustellen.

Beispiele für Schaufeln sind aus den Dokumenten EP3168420A1, EP2617944A2, WO2017003416A1, EP2626517A2 und US20060280610A1 bekannt.

Die der Erfindung zu Grunde liegende Aufgabe wird darin gesehen, eine Schaufel für eine schnelllaufende Turbinenstufe bereitzustellen, die eine verbesserte Robustheit aufweist im Betrieb.

Dieser Aufgabe wird gelöst durch eine Schaufel mit den Merkmalen des Anspruchs 1, eine Turbinenstufe mit den Merkmalen des Anspruchs 7 und durch ein Flugzeugtriebwerk mit den Merkmalen des Anspruchs 9. Vorteilhafte Ausgestaltungen mit zweckmäßigen Weiterbildungen sind in den abhängigen Patentansprüchen angegeben.

Vorgeschlagen wird also eine Schaufel für eine schnelllaufende Turbinenstufe einer Fluggasturbine, insbesondere eines Flugzeugtriebwerks, mit einem radial innen angeordneten Schaufelfuß, einem radial äußeren Deckband, und mit einem Schaufelblatt, das sich zwischen dem Schaufelfuß und dem Deckband erstreckt. Dabei ist vorgesehen, dass das äußere Deckband nur ein einziges radial von dem Deckband vorstehendes Dichtelement, insbesondere nur einen einzigen Dichtfin, umfasst.

"Schnelllaufend" kann insbesondere bedeuten, dass die Schaufel für ein An² ≥ 4000 m²/s² , vorzugsweise ≥ 4500 m²/s² , insbesondere ≥ 5000 m²/s² im ADP-Bereich der Fluggasturbine (10) ausgelegt ist und/oder für ein(e) entsprechend ausgelegte(s) Turbinenstufe/Fluggasturbine geeignet und/oder bestimmt sind. "An²" ist dabei die Ringraumfläche A am Austritt der Turbinenstufe multipliziert mit dem Quadrat der Drehzahl n. "ADP" steht für "Aerodynamic Design Point", d.h. den Betriebszustand auf Reiseflughöhe, der auch "cruise condition" genannt wird. Bei konventionellen, nicht schnelllaufenden Turbinenstufen beträgt An² im ADP-Bereich dagegen deutlich unter 2000 m²/s².

Durch das Vorsehen von lediglich einem Dichtelement bzw. einem Dichtfin an dem Deckband kann eine Reduzierung der Randlast der Schaufel erreicht werden. Durch die Einsparung von Masse an den radial äußersten Bereichen der Schaufel können die wirkenden Fliehkräfte maßgeblich reduziert werden. Somit können insbesondere in dem Schaufelblatt bzw. dem Schaufelprofil auftretende Spannungen reduziert werden. Mit zunehmender Spannung und mit abnehmender Duktilität des Schaufelwerkstoffs nimmt die Robustheit der Schaufel gegenüber Schlagbeanspruchung ab. Das nur eine Dichtelement ermöglicht eine verbesserte Robustheit insbesondere im Hinblick auf höhere Drehzahlen und weniger duktile Schaufelwerkstoffe.

Das Schaufelblatt kann radial innen eine innere Sehnenlänge aufweisen, die mindestens das 1,1-fache, vorzugsweise mindestens das 1,2-fache, insbesondere mindestens das 1,3-fache von einer radial äußeren Sehnenlänge beträgt, wobei die innere Sehnenlänge unmittelbar oberhalb des Schaufelfußes an dem Schaufelblatt gemessen ist und die äußere Sehnenlänge unmittelbar unterhalb des Deckbandes an dem Schaufelblatt gemessen ist. Die Sehnenlänge verändert sich somit über die radiale Erstreckung des Schaufelblatts im Vergleich zu einer konventionellen Turbinenschaufel, bei der die innere Sehnenlänge weniger als 10% länger als die äußeren Sehnenlänge ist, in besonders hohem Maße. Dies kann aus aerodynamischen Gesichtspunkten zwar zunächst nachteilig sein, gestattet dafür aber eine besonders vorteilhafte Verteilung der Mittelspannung und des Widerstandsmoments über die Schaufelhöhe. Dadurch kann die Robustheit gegenüber Schlagbeanspruchung, insbesondere bei hohen Drehzahlen und vergleichsweise wenig duktilen Werkstoffen, insbesondere spröden Werkstoffen wie z.B. TiAl, weiter verbessert werden.

Die Schaufel kann aus einem spröden Werkstoff, beispielsweise einer Titanaluminid-Legierung hergestellt sein. Dabei kann die Schaufel gegossen oder geschmiedet oder/und additiv, beispielsweise durch (selektives) Elektronenstrahlschmelzen (s)EBM, gefertigt sein. Unter dem Begriff spröde Werkstoffe, wie beispielsweis TiAl, sind Werkstoffe zu verstehen, bei denen eine maximale totale Dehnung von <2% bei Raumtemperatur auftritt.

An dem Schaufelblatt können wenigstens abschnittsweise Materialverdickungen vorgesehen sein, insbesondere eine zumindest abschnittsweise verdickte Vorderkante. Hierdurch kann Schädigungen aufgrund der erhöhten Fremdpartikelenergie, insbesondere den sogenannten Impacts, entgegengewirkt werden und die Robustheit noch weiter verbessert werden.

An dem Schaufelblatt oder/und an dem Dichtelement kann zumindest abschnittsweise eine Panzerung aus einem von dem Material der Schaufel unterschiedlichen Material ausgebildet ist, insbesondere aus einem keramischen Material oder aus einem Ni-basierten Material. Eine derartige teilweise oder vollständige Panzerung ermöglicht eine Verstärkung der Schaufel, um Schädigungen entgegenzuwirken.

Ferner wird eine Turbinenstufe für eine Gasturbine, insbesondere Fluggasturbine vorgeschlagen mit mehreren in Umfangsrichtung nebeneinander angeordneten, oben beschriebenen Schaufeln. Bei einer solchen Turbinenstufe können in Umfangsrichtung benachbarte Schaufeln derart ausgebildet sein, dass sie unterschiedliche Eigenfrequenzen aufweisen. Hierzu können benachbarte Schaufeln beispielsweise jeweils voneinander unterschiedliche Geometrien des Schaufelblatts oder/und des Deckbandes aufweisen.

Für das Deckband kann eine Kühlung vorgesehen sein. Beispielsweise kann von außerhalb der Schaufel und des Deckbandes Kühlluft zugeführt werden. Alternativ oder zusätzlich kann die Schaufel und/oder das Deckband auch von innen gekühlt werden. Durch eine Kühlung, insbesondere des anstreifenden, thermisch besonders belasteten radial äußeren Deckbandes, kann die Temperatur des Deckbandes im Betrieb der Fluggasturbine reduziert werden. Dadurch kann das temperaturabhängige Kriechverhalten hin zu einer größeren Kriechresistenz verbessert werden. Dies gestattet die Wahl eines robusteren, duktileren Werkstoffs, bspw. einer Titanaluminid(TiAl)-Legierung mit einer duktileren Mikrostruktur, dessen Kriechresistenz erst durch die Kühlung in einen gewünschten Bereich verschoben wird. Auch hierdurch kann die Robustheit weiter verbessert werden.

Das Schaufeldeckbandgewicht wiegt weniger als 7 Gramm.

In allen Profilschnitten des Schaufelprofils kann sich eine statische Mittelspannung von kleiner als 150MPa einstellen.

Schließlich wird auch ein Flugzeugtriebwerk mit einer oben erwähnten schnelllaufenden Turbinenstufe vorgeschlagen, wobei die Turbinenstufe im Betrieb des Flugzeugtriebwerks schneller dreht als ein Fan des Flugtriebwerks. Es handelt sich hierbei also um ein Flugzeugtriebwerk mit einem sogenannten Getriebefan bzw. geared Turbofan (GTF).

Bei einem solchen Flugzeugtriebwerk kann eine Zuleitung von Kühlfluid, insbesondere Kühlluft, zu der Kühleinrichtung in dem Deckband der Schaufeln der Turbinenstufe von stromaufwärts erfolgen. Dabei kann die Kühlluft beispielsweise durch stromaufwärts angeordnete Leitschaufeln hindurch bereitgestellt werden.

Nachfolgend wird die Erfindung unter Bezugnahme auf die anliegenden Figuren beispielhaft und nicht einschränkend beschrieben.
Fig. 1 zeigt in einer vereinfachten schematischen Darstellung ein Prinzipbild einer Fluggasturbine bzw. eines Flugzeugtriebwerks.
Fig. 2 zeigt in einer stark vereinfachten schematischen Draufsicht von radial außen zwei in Umfangsrichtung nebeneinander angeordnete Schaufeln einer Turbinenstufe.
Fig. 3 zeigt in einer schematischen Darstellung eine Schaufel mit ihren Sehnenlängen.

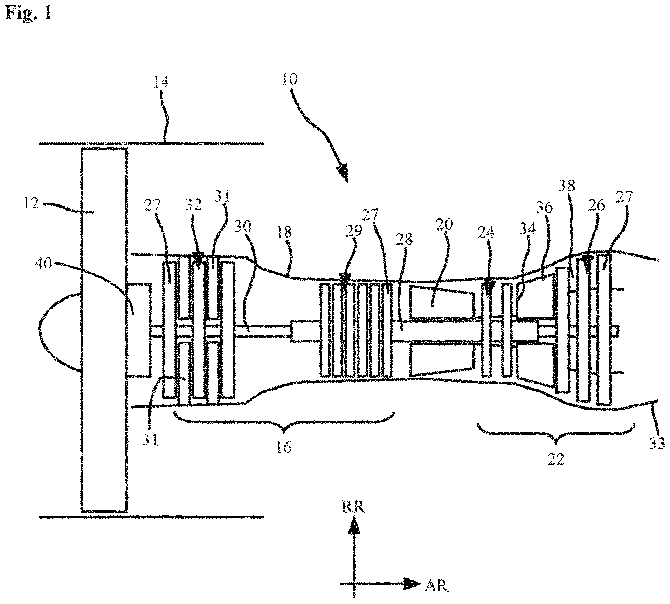

Fig. 1 zeigt schematisch und vereinfacht eine Fluggasturbine 10, die rein beispielhaft als Mantelstromtriebwerk illustriert ist. Die Gasturbine 10 umfasst einen Fan 12, der von einem angedeuteten Mantel 14 umgeben ist. In Axialrichtung AR der Gasturbine 10 schließt sich an den Fan 12 ein Verdichter 16 an, der in einem angedeuteten inneren Gehäuse 18 aufgenommen ist und einstufig oder mehrstufig ausgebildet sein kann. An den Verdichter 16 schließt sich die Brennkammer 20 an. Aus der Brennkammer ausströmendes heißes Abgas strömt dann durch die sich anschließende Turbine 22, die einstufig oder mehrstufig ausgebildet sein kann. Im vorliegenden Beispiel umfasst die Turbine 22 eine Hochdruckturbine 24 und eine Niederdruckturbine 26. Eine Hohlwelle 28 verbindet die Hochdruckturbine 24 mit dem Verdichter 16, insbesondere einem Hochdruckverdichter 29, so dass diese gemeinsam angetrieben bzw. gedreht werden. Eine in Radialrichtung RR der Turbine weitere innen liegende Welle 30 verbindet die Niederdruckturbine 26 mit dem Fan 12 und mit einem hier Niederdruckverdichter 32, so dass diese gemeinsam angetrieben bzw. gedreht werden. An die Turbine 22 schließt sich eine hier nur angedeutete Schubdüse 33 an.

Im dargestellten Beispiel einer Fluggasturbine 10 ist zwischen der Hochdruckturbine 24 und der Niederdruckturbine 26 ein Turbinenzwischengehäuse 34 angeordnet, das um die Wellen 28, 30 angeordnet ist. Zwischen der Hochdruckturbine 24 und der Niederdruckturbine 26 kann bei andere Konstruktionen auch lediglich ein Übergangskanal vorgesehen sein statt eines Turbinenzwischengehäuses 34. In seinem radial äußeren Bereich 36 wird das Turbinenzwischengehäuse 34 von heißen Abgasen aus der Hochdruckturbine 24 durchströmt. Das heiße Abgas gelangt dann in einen Ringraum 38 der Niederdruckturbine 26. Von den Verdichtern 28, 32 und den Turbinen 24, 26 sind beispielhaft Laufschaufelkränze 27 dargestellt. Üblicherweise vorhandene Leitschaufelkränze 31 sind aus Gründen der Übersicht beispielhaft nur bei dem Verdichter 32 dargestellt.

Die Niederdruckturbine 26 und der Fan 12 sind in diesem Beispiel mittels eines hier nur schematisch angedeuteten Getriebes 40 miteinander, insbesondere eines Planetengetriebes, verbunden. Hierdurch wird die Niederdruckturbine 26 zu einer sogenannt schnelllaufenden Turbinenstufe, die eine höhere Umlaufgeschwindigkeit aufweist als der Fan 12. Dabei kann der Drehsinn der Niederdruckturbine 26 gleich oder verschieden zum Drehsinn des Fans 12 sein.

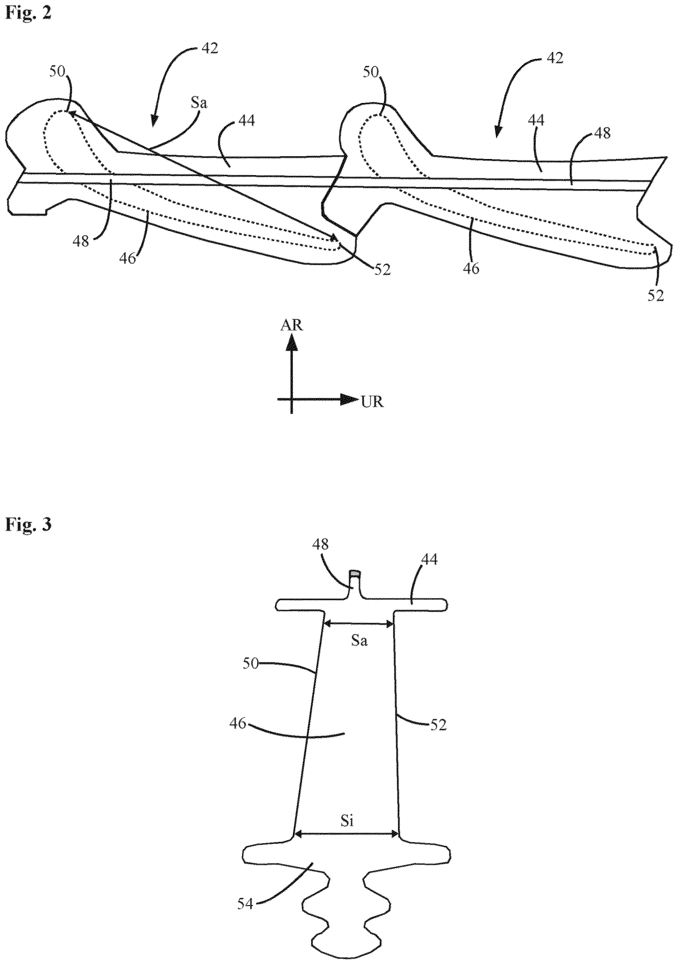

Die nachfolgende Beschreibung einer Ausführungsform der Erfindung bezieht sich insbesondere auf eine Turbinenstufe der Niederdruckturbine 26, in der mehrere Schaufeln 42 gemäß Fig. 2 in Umfangsrichtung nebeneinander angeordnet sind.

Die Schaufel 42 weist radial außen ein Deckband 44 auf. Nach radial innen schließt sich an das Deckband 44 das Schaufelblatt 46 an. An dem Deckband 44 ist ein einziges Dichtelement 48, insbesondere ein einzelner Dichtfin 48, angeordnet. Das Dichtelement 48 erstreckt sich im Wesentlichen in Umfangsrichtung UR und steht von dem Deckband 44 in Radialrichtung RR nach außen vor. Im Gegensatz zu bekannten Schaufeln mit üblicherweise zwei Dichtelementen, kann durch das Vorsehen von lediglich einem Dichtfin 48 im radial äußeren Bereich der Schaufel 42 Masse reduziert werden, was sich günstig auf die im Betrieb auf die Schaufel 42 wirkenden Kräfte auswirkt.

Ergänzend zum Vorsehen von lediglich einem radial äußeren Dichtfin 48 kann die Schaufel 42 bzw. deren Schaufelblatt 46 radial innen und radial außen unterschiedliche Sehnenlängen Si bzw. Sa aufweisen, was beispielhaft in der Fig. 3 dargestellt ist. Dabei wird die Sehnenlänge Si bzw. Sa zwischen einer Vorderkante 50 und einer Hinterkante 52 des Schaufelblatts 46 gemessen, wie dies auch in der Fig. 2 für die linke Schaufel 42 gezeigt ist.

Die radial innere Sehnenlänge Si wird dabei oberhalb eines Schaufelfußes 54 bestimmt. Die radial äußere Sehnenlänge Sa wird unterhalb des Deckbandes 44 bestimmt. Die innere Sehnenlänge Si beträgt dabei etwa das 1,1-fache bis 1,4-fache der äußeren Sehnenlänge Sa.

An dem Dichtfin 48 oder/und an der Vorderkante 50 des Schaufelblatts 46 kann ein Materialauftrag 56 vorgesehen sein, der zur Panzerung des übrigen Schaufelmaterials dient. Die Schaufel 42 kann insbesondere aus einem Titanaluminid (TiAl) hergestellt sein. Eine Panzerung 56 am Dichtfin 44 bzw. der Vorderkante 50 kann aus einem keramischen Material oder aus einem Ni-basierten Material, wie etwa Bornitrid, hergestellt sein.

### Bezugszeichenliste

- 10: Fluggasturbine
- 12: Fan
- 14: Mantel
- 16: Verdichter
- 18: Gehäuse
- 20: Brennkammer
- 22: Turbine
- 24: Hochdruckturbine
- 26: Niederdruckturbine
- 27: Laufschaufelkranz
- 28: Hohlwelle
- 29: Hochdruckverdichter
- 30: Welle
- 31: Leitschaufelkranz
- 32: Niederdruckverdichter
- 33: Schubdüse
- 34: Turbinenzwischengehäuse
- 36: radial äußerer Bereich
- 38: Ringraum
- 40: Getriebe
- 42: Schaufel
- 44: Deckband
- 46: Schaufelblatt
- 48: Dichtelement
- 50: Vorderkante
- 52: Hinterkante
- 54: Schaufelfuß
- 56: Panzerung
- AR: Axialrichtung
- RR: Radialrichtung
- Si: radial innere Sehnenlänge
- Sa: radial äußere Sehnenlänge
- UR: Umfangsrichtung

## Patentansprüche

1. Schaufel, nämlich Laufschaufel, einer schnelllaufenden Turbinenstufe (26) einer Fluggasturbine (10), insbesondere eines Flugzeugtriebwerks, welche Turbinenstufe mittels eines Getriebes mit dem Fan gekoppelt ist, so dass es sich im Betrieb der oder die Laufschaufelkränze dieser Turbinenstufe schneller drehen als der Fan, mit
einem radial innen angeordneten Schaufelfuß (54),
einem radial äußeren Deckband (44), und
einem Schaufelblatt (46), das sich zwischen dem Schaufelfuß (54) und dem Deckband (44) erstreckt,
wobei das äußere Deckband (44) nur ein einziges radial von dem Deckband (44) vorstehendes Dichtelement (48), nämlich nur einen einzigen Dichtfin, umfasst, **dadurch gekennzeichnet, dass** die Schaufel (42) aus einem spröden Werkstoff, nämlich einem Werkstoff, bei dem eine maximale totale Dehnung von < 2% bei Raumtemperatur auftritt, hergestellt ist und ein Schaufeldeckbandgewicht weniger als 7 Gramm wiegt.

2. Schaufel nach Anspruch 1, **dadurch gekennzeichnet, dass** die Schaufel für ein An2 ≥ 4000 m²/s² , vorzugsweise ≥ 4500 m²/s² , insbesondere ≥ 5000 m²/s² im ADP-Bereich der Fluggasturbine (10) ausgelegt ist und/oder für eine dafür ausgelegte Turbinenstufe (26) oder Fluggasturbine (10) geeignet und/oder bestimmt ist.

3. Schaufel nach Anspruch 1 oder 2, **dadurch gekennzeichnet, dass** das Schaufelblatt (46) radial innen eine innere Sehnenlänge (Si) aufweist, die mindestens das 1,1-fache bis 1,4-fache von einer radial äußeren Sehnenlänge (Sa) beträgt, wobei die innere Sehnenlänge (Si) unmittelbar oberhalb des Schaufelfußes (54) an dem Schaufelblatt (46) gemessen ist und die äußere Sehnenlänge (Sa) unmittelbar unterhalb des Deckbandes (44) an dem Schaufelblatt (46) gemessen ist.

4. Schaufel nach einem der vorhergehenden Ansprüche, **dadurch gekennzeichnet, dass** die Schaufel (42) aus einer Titanaluminid-Legierung, hergestellt ist, insbesondere gegossen, geschmiedet oder/und additiv gefertigt ist.

5. Schaufel nach einem der vorhergehenden Ansprüche, **dadurch gekennzeichnet, dass** an dem Schaufelblatt (46) wenigstens abschnittsweise Materialverdickungen vorgesehen sind, insbesondere eine zumindest abschnittsweise verdickte Vorderkante (50) (aerodyn nachteilhaft, kann bei schnelllaufend dicker sein wegen anderer langnamer Anströmung -> konv. Nicht möglich).

6. Schaufel nach einem der vorhergehenden Ansprüche, **dadurch gekennzeichnet, dass** an dem Schaufelblatt (46) oder/und an dem Dichtelement (48) zumindest abschnittsweise eine Panzerung (56) aus einem von dem Material der Schaufel (42) unterschiedlichen Material ausgebildet ist, insbesondere aus einem keramischen Material oder aus einem Ni-basierten Material.

7. Turbinenstufe für eine Gasturbine, insbesondere Fluggasturbine (10) mit mehreren in Umfangsrichtung (UR) nebeneinander angeordneten Schaufeln (42) nach einem der vorhergehenden Ansprüche.

8. Turbinenstufe nach Anspruch 7, **dadurch gekennzeichnet, dass** für das Deckband (44) eine Kühlung vorgesehen ist.

9. Turbinenstufe nach Anspruch 7 oder 8, **dadurch gekennzeichnet, dass** in Umfangsrichtung (UR) benachbarte Schaufeln (42) derart ausgebildet sind, dass sie unterschiedliche Eigenfrequenzen aufweisen, insbesondere eine voneinander unterschiedliche Geometrie des Schaufelblatts (46) und/oder des Deckbandes (44) aufweisen.

10. Turbinenstufe nach Anspruch 8 oder 9, **dadurch gekennzeichnet, dass** eine Zuleitung von Kühlfluid, insbesondere Kühlluft, zu der Kühleinrichtung in dem Deckband (44) der Schaufeln (42) der Turbinenstufe (26) von stromaufwärts erfolgt.

11. Turbinenstufe nach einem der Ansprüche 7 bis 10, **dadurch gekennzeichnet, dass** sich an den mehreren Schaufeln (42) in allen Profilschnitten des Schaufelprofils jeweils eine statische Mittelspannung von kleiner als 150MPa einstellt.

12. Flugzeugtriebwerk mit einer schnelllaufenden Turbinenstufe nach einem der Ansprüche 7 bis 11, **dadurch gekennzeichnet, dass** die Turbinenstufe (26) im Betrieb des Flugzeugtriebwerks (10) schneller dreht als ein Fan (12) des Flugtriebwerks (10).

## Claims

1. Blade, namely a rotor blade, of a high-speed turbine stage (26) of an aircraft gas turbine (10), in particular of an aircraft engine, which turbine stage is coupled to the fan by means of a gear, so that, during operation, the rotor blade ring(s) of this turbine stage rotate(s) faster than the fan, comprising
a radially inwardly arranged blade root (54),
a radially outer shroud (44), and
an airfoil (46) extending between the blade root (54) and the shroud (44),
the outer shroud (44) comprising only a single sealing element (48) projecting radially from the shroud (44), namely only a single sealing fin, **characterized in that** the blade (42) is made of a brittle material, namely a material in which a maximum total elongation of <2% occurs at room temperature, and a blade shroud weight weighs less than 7 grams.

2. Blade according to claim 1, **characterized in that** the blade is designed for an An2 ≥ 4000 m²/s², preferably ≥ 4500 m²/s², in particular ≥ 5000 m²/s² in the ADP range of the aircraft gas turbine (10) and/or is suitable and/or intended for a turbine stage (26) or aircraft gas turbine (10) designed therefor.

3. Blade according to either claim 1 or claim 2, **characterized in that** the airfoil (46) radially inwardly has an inner chord length (Si) which is at least 1.1 times to 1.4 times a radially outer chord length (Sa), the inner chord length (Si) being measured immediately above the blade root (54) on the airfoil (46) and the outer chord length (Sa) being measured immediately below the shroud (44) on the airfoil (46).

4. Blade according to any of the preceding claims, **characterized in that** the blade (42) is made of a titanium aluminide alloy, in particular cast, forged and/or additively manufactured.

5. Blade according to any of the preceding claims, **characterized in that** material thickenings are provided on the airfoil (46) at least in portions, in particular a leading edge (50) which is thickened at least in portions (aerodynamically disadvantageous, can be thicker when running at high speed due to different slow airflow -> conv. Not possible).

6. Blade according to any of the preceding claims, **characterized in that** an armoring (56) made of a material different from the material of the blade (42), in particular made of a ceramic material or of a Ni-based material, is formed at least in portions on the airfoil (46) and/or on the sealing element (48).

7. Turbine stage for a gas turbine, in particular an aircraft gas turbine (10) having a plurality of blades (42) arranged next to one another in the circumferential direction (UR) according to any of the preceding claims.

8. Turbine stage according to claim 7, **characterized in that** cooling is provided for the shroud (44).

9. Turbine stage according to either claim 7 or claim 8, **characterized in that** adjacent blades (42) in the circumferential direction (UR) are designed such that they have different natural frequencies, in particular have a different geometry of the airfoil (46) and/or the shroud (44) from one another.

10. Turbine stage according to either claim 8 or claim 9, **characterized in that** a supply of cooling fluid, in particular cooling air, to the cooling device in the shroud (44) of the blades (42) of the turbine stage (26) takes place from upstream.

11. Turbine stage according to any of claims 7 to 10, **characterized in that** a static mean stress of less than 150 MPa is established on the plurality of blades (42) in all profile sections of the blade profile.

12. Aircraft engine having a high-speed turbine stage according to any of claims 7 to 11, **characterized in that** the turbine stage (26) rotates faster during operation of the aircraft engine (10) than a fan (12) of the aircraft engine (10).

## Revendications

1. Aube, à savoir aube mobile, d'un étage de turbine (26) à grande vitesse d'une turbine à gaz d'aéronef (10), en particulier d'un moteur d'aéronef, lequel étage de turbine est accouplé à la soufflante au moyen d'un engrenage, de sorte qu'en fonctionnement, la ou les couronnes d'aubes mobiles dudit étage de turbine tournent plus vite que la soufflante, comportant
un pied d'aube (54) disposé radialement à l'intérieur,
une bande de recouvrement (44) radialement extérieure, et
une pale d'aube (46) qui s'étend entre le pied de pale (54) et la bande de recouvrement (44),
dans laquelle la bande de recouvrement (44) extérieure ne comprend qu'un seul élément d'étanchéité (48) faisant saillie radialement à partir de la bande de recouvrement (44), à savoir qu'une seule pointe d'étanchéité,
**caractérisée en ce que** l'aube (42) est fabriquée à partir d'un matériau fragile, à savoir un matériau dans lequel un allongement total maximal < 2 % se produit à température ambiante, et un poids de bande de recouvrement d'aube pèse moins de 7 grammes.

2. Aube selon la revendication 1, **caractérisée en ce que** l'aube est conçue pour une valeur An2 ≥ 4 000 m²/s², de préférence ≥ 4 500 m²/s², en particulier ≥ 5 000 m²/s², dans la zone du point de conception aérodynamique (ADP) de la turbine à gaz d'aéronef (10) et/ou est adaptée et/ou destinée à un étage de turbine (26) ou à une turbine à gaz d'aéronef (10) conçu à cet effet.

3. Aube selon la revendication 1 ou 2, **caractérisée en ce que** la pale d'aube (46) présente radialement à l'intérieur une longueur de corde (Si) intérieure qui est d'au moins 1,1 fois à 1,4 fois une longueur de corde (Sa) radialement extérieure, dans laquelle la longueur de corde (Si) intérieure est mesurée directement au-dessus du pied d'aube (54) sur la pale d'aube (46) et la longueur de corde (Sa) extérieure est mesurée directement en dessous de la bande de recouvrement (44) sur la pale d'aube (46).

4. Aube selon l'une des revendications précédentes, **caractérisée en ce que** l'aube (42) est fabriquée en un alliage d'aluminure de titane, en particulier par coulée, forgeage ou/et fabrication additive.

5. Aube selon l'une des revendications précédentes, **caractérisée en ce que** des épaississements de matériau sont prévus au moins dans certaines sections sur la pale d'aube (46), en particulier un bord d'attaque (50) épaissi au moins dans certaines sections (désavantageux du point de vue aérodynamique, peut être plus épais à grande vitesse en raison d'un autre écoulement plus lent -> conv. Impossible).

6. Aube selon l'une des revendications précédentes, **caractérisée en ce qu'**un blindage (56) en un matériau différent du matériau de l'aube (42), en particulier en un matériau céramique ou en un matériau à base de Ni, est formé au moins dans certaines sections sur la pale d'aube (46) ou/et sur l'élément d'étanchéité (48).

7. Étage de turbine pour une turbine à gaz, en particulier une turbine à gaz d'aéronef (10), comportant plusieurs aubes (42) selon l'une des revendications précédentes disposées côte à côte dans la direction circonférentielle (UR).

8. Étage de turbine selon la revendication 7, **caractérisé en ce qu'**un refroidissement est prévu pour la bande de recouvrement (44).

9. Étage de turbine selon la revendication 7 ou 8, **caractérisé en ce que** des aubes (42) voisines dans la direction circonférentielle (UR) sont formées de telle sorte qu'elles présentent des fréquences propres différentes, en particulier présentent des géométries de la pale d'aube (46) et/ou de la bande de recouvrement (44) différentes l'une de l'autre.

10. Étage de turbine selon la revendication 8 ou 9, **caractérisé en ce qu'**une amenée de fluide de refroidissement, en particulier d'air de refroidissement, vers le dispositif de refroidissement dans la bande de recouvrement (44) des aubes (42) de l'étage de turbine (26) est effectuée depuis l'amont.

11. Étage de turbine selon l'une des revendications 7 à 10,
**caractérisé en ce que** respectivement une tension moyenne statique inférieure à 150 MPa s'établit au niveau des aubes (42) dans toutes les sections de profil du profil d'aube.

12. Moteur d'aéronef comportant un étage de turbine à grande vitesse selon l'une des revendications 7 à 11, **caractérisé en ce que** l'étage de turbine (26) tourne plus vite qu'une soufflante (12) du moteur d'aéronef (10) pendant le fonctionnement du moteur d'aéronef (10).
